# EUROPÄISCHE PATENTSCHRIFT

(11) **EP 2 359 677 B1**
(45) Veröffentlichungstag und Bekanntmachung des Hinweises auf die Patenterteilung: **05.06.2013**
(21) Anmeldenummer: 10192308.4
(22) Anmeldetag: 24.11.2010
(51) Int. Cl.: A01F 7/06, A01F 12/22

(54) **Montagebauteil zur Befestigung eines Erntegutbehandlungselementes an einem Abscheiderotor**
Assembly component for fastening a harvested goods processing element to a separating rotor
Composant de montage pour la fixation d'un élément de traitement de produits de récolte sur un rotor de séparateur

(30) Priorität: 24.02.2010 DE 102010009163
(43) Veröffentlichungstag der Anmeldung: 24.08.2011
(73) Patentinhaber: CLAAS Selbstfahrende Erntemaschinen GmbH, 33428 Harsewinkel (DE)
(72) Erfinder: Ramforth, Markus, 33775, Versmold (DE); Schwersmann, Berthold, 49186 Bad Iburg (DE); Bußmann, Jens, 49178 Ostercappeln (DE); Buddenkotte, Franz, 33428 Harsewinkel (DE); Krieft, Manfred, 33428 Harsewinkel (DE)

(56) Entgegenhaltungen:
- EP-A1- 0 340 875
- US-A- 5 192 245
- US-A- 5 919 086
- US-A1- 2008 167 100

## Beschreibung

Die vorliegende Erfindung betrifft ein Montagebauteil zur Befestigung eines Erntegutbehandlungselementes an einem Abscheiderotor, wobei das Montagebauteil als ein Profilbauteil mit sich abschnittsweise in Umfangsrichtung des Abscheiderotors erstreckenden, einander zugewandten Seitenwänden ausgeführt ist.

Aus der Patentschrift US 5,192,245 ist ein Montagebauteil zur Befestigung eines Dreschelementes an einem axialen Dresch-Trennrotor bekannt. Das Montagebauteil, an dem das Dreschelement lösbar angeordnet ist, ist als ein Profilbauteil mit sich abschnittsweise in Umfangsrichtung des Abscheiderotors erstreckenden, zueinander parallelen Seitenwänden ausgeführt. Die Seitenwände des Montagebauteiles weisen flügelartige, zu der Mantelfläche des Dresch-Trennrotors parallele Abschnitte auf, mit denen das Montagbauteil mit dem Dresch-Trennrotor durch Punktschweißen verbunden ist. Auf das Montagebauteil ist das L-förmige Dreschelement aufgebracht, welches dem zu bearbeitenden Erntegutstrom unmittelbar ausgesetzt ist.

Als nachteilig an dem Montagebauteil gemäß der US 5,192,245 erweist sich, dass mit zunehmender radialer Ausdehnung des Montagebauteiles und/oder des daran angeordneten Dreschelementes zu der Mantelfläche des Abscheiderotors die auf dieses einwirkenden Kräfte auf Grund des ungünstiger werdenden Hebelverhältnisses größer werden, so dass ein sicherer Halt des mit der der Mantelfläche des Abscheiderotors verschweißten Montagebauteiles nicht gewährleistet werden kann. Das Ablösen des Montagebauteiles von der Mantelfläche führt zu starken Beschädigungen des Abscheiderotors, die dessen Leistungsfähigkeit negativ beeinflussen.

Aufgabe der vorliegenden Erfindung ist es daher, ein Montagebauteil der eingangs genannten Art derart weiterzuentwickeln, dass eine höhere Standzeit des Abscheiderotors sowie eine höhere Belastbarkeit der Montagebauteile und des daran angeordneten Erntegutbehandlungselementes erreicht wird.

Die Aufgabe wird erfindungsgemäß durch die kennzeichnenden Merkmale des Patentanspruchs 1 gelöst.

Vorteilhafte Weiterentwicklungen und Ausgestaltungen der Erfindung sind Gegenstand der jeweiligen Unteransprüche.

Gemäß dem Anspruch 1 wird vorgeschlagen, dass zur Befestigung des Trägerelementes auf der Oberfläche des Abscheiderotors jede der Seitenwände des Trägerelementes eine im Wesentlichen parallel zu dieser verlaufende Längsschweißnaht mit einem über die Länge der jeweiligen Seitenwand hinausgehenden Schweißnahtabschnitt aufweist. Die Verlängerung der Längsschweißnaht über die Länge der Seitenwand hinaus und die von der fluchtenden Fortführung des Schweißnahtabschnittes abweichende Ausführung führt zu einem Abbau der während des Betriebes des Abscheidrotors auftretenden Spannungsspitzen in den Längsschweißnähten an den Seitenwänden des Montageelementes über die die Seitenwände überragenden Schweißnahtabschnitte.

Dabei kann der über die Länge der jeweiligen Seitenwand hinausgehende Schweißnahtabschnitt unter einem Winkel zu der jeweiligen Seitenwand ausgeführt sein.

Vorzugsweise sollte sich der über die Länge der jeweiligen Seitenwand hinausgehende Schweißnahtabschnitt der Längsschweißnaht in Drehrichtung des Abscheiderotors erstrecken. Das von dem Montageelement während des Betriebes des Abscheiderotors aufzunehmende Moment, welches über das mit dem Erntegutbehandlungselement in Berührung kommende Erntegut auf das Montageelement aufgebracht wird, wird in die in die Kraftbeaufschlagungsrichtung verlängerten Schweißnahtabschnitte eingeleitet, wodurch die Spannungsspitzen im Sockelbereich des Montageelementes, dem Übergangsbereich von dem Montageelement zu der Mantelfläche des Abscheiderotors, reduziert werden.

In vorteilhafter Weiterbildung kann sich der axiale Abstand der Schweißnahtabschnitte der Längsschweißnähte zueinander in Drehrichtung des Abscheiderotors vergrößern, wodurch der Abbau der Spannungsspitzen begünstigt wird.

Insbesondere kann das Montagebauteil als ein U-Profil ausgeführt sein.

Vorteilhafterweise können die Seitenwände des Montagebauteiles auf ihrer der Oberfläche des Abscheiderotors zugewandten Seite an die zylindrische Kontur des Abscheiderotors angepasst sein.

Weiterhin können die Seitenwände eine Aussparung aufweisen. Die Aussparung in den Seitenwänden kann dazu dienen, bei einer auftretenden stoßartigen Belastung des Erntegutbehandlungselementes das Nachgeben des Montageelementes in Drehrichtung des Abscheiderotors zu erreichen, um ein Abreißen des Montageelementes von der Mantelfläche des Abscheiderotors zu vermeiden, was zu einem unbrauchbar werden des Abscheiderotors führen kann. Das eingeknickte Montageelement ist hingegen in vergleichsweise einfacher Weise austauschbar.

Die Erfindung wird nachstehend anhand eines in den Zeichnungen dargestellten Ausführungsbeispieles näher erläutert.

Es zeigen:
- Fig. 1: eine schematisierte Längsschnittdarstellung eines Mähdreschers;
- Fig. 2: eine Teilansicht eines in Längsrichtung in dem Mähdrescher angeordneten Rotors gemäß Fig. 1;
- Fig. 3: eine Detailansicht eines auf dem Rotor angeordneten Montagelementes gemäß Fig. 2.

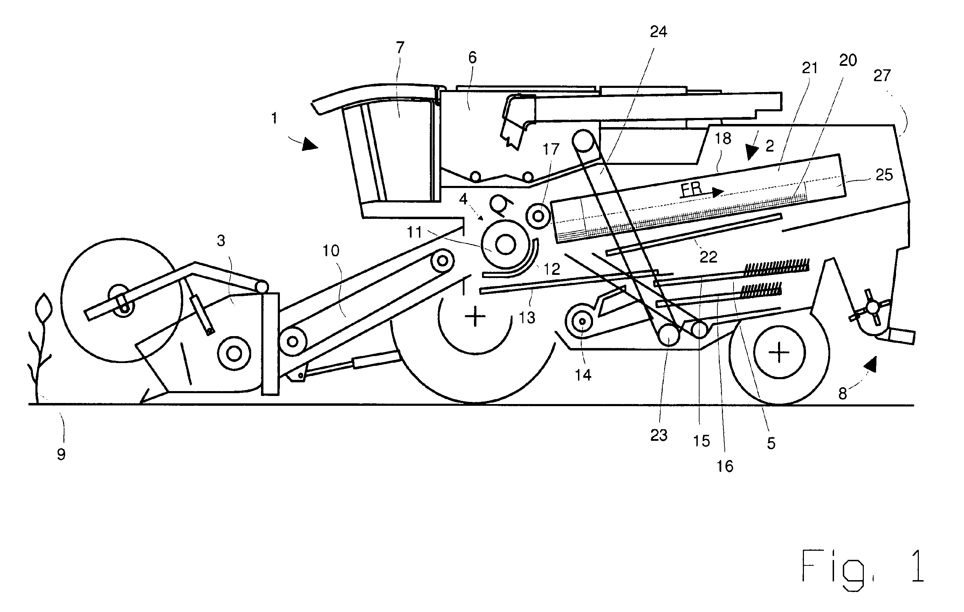

Der in Fig. 1 schematisch dargestellte Mähdrescher 1 mit einem Axialabscheider 2 besteht im Wesentlichen aus einem Schneidwerk 3, einer Drescheinrichtung 4, einer Reinigungseinrichtung 5, einem Korntank 6, einer Fahrerkabine 7 sowie aus einem dem Axialabscheider 2 nachgeordneten Strohhäcksler 8.

Das vom Schneidwerk 3 abgeschnittene Erntegut 9 gelangt über einen Schrägförderkanal 10 zu einer nach dem Tangentialprinzip arbeitenden Drescheinrichtung 4. Diese besteht aus einer Dreschtrommel 11 und einem zugeordneten Dreschkorb 12. Die am Dreschkorb 12 abgeschiedenen Erntegutbestandteile werden über einen Förderboden 13 zu einer aus einem Gebläse 14 und einem Ober- und Untersieb 15,16 bestehenden Reinigungseinrichtung 5 geleitet. Das den Dreschkorb 12 in tangentialer Richtung verlassende Korn-Kurzstroh-Gemisch wird in den Axialabscheider 2 gefördert. Der Fördervorgang wird durch eine parallel zur Dreschtrommel 11 angeordnete, rotierende Wendetrommel 17 unterstützt.

Der Axialabscheider 2 ist in Längsrichtung des Mähdreschers 1 angeordnet und besteht im Wesentlichen aus einem feststehenden, in Förderrichtung FR ansteigenden, zylindrischen Gehäuse 18, in dem ein drehbar angetriebener Abscheiderotor 19 gelagert ist. Das Gehäuse 18 weist einen unteren Bereich mit Abscheidrosten 20 und einen geschlossenen oberen Deckbereich 21 mit an der Innenseite angeordneten Leiteinrichtungen zur Unterstützung der Förderbewegung des Erntegutes auf. Der Umfangsbereich des Abscheiderotors 19 ist mit verschiedenartig ausgebildeten Erntegutbehandlungselementen 34 wie Paddeln 35 oder Leisten 29 versehen, die den Abscheidevorgang intensivieren.

An den Abscheiderosten 20 werden die im Erntegutgemisch enthaltenen Körner sowie Anteile von Kurzstroh und Spreu abgeschieden und über den darunter liegenden Rücklaufboden 22 zur Reinigungseinrichtung 5 gefördert. Die gereinigten Körner gelangen über eine Förderschnecke 23 und einen Elevator 24 in den Korntank 6. Innerhalb des Axialabscheiders 2 wird das Stroh in Richtung des Abgabebereiches 25 gefördert und gelangt von dort aus über eine Auslassbreite 26 verteilt in den Strohhäcksler 8, der quer zur Fahrtrichtung an einem Rahmen unterhalb der Strohauslaufhaube 27 befestigt ist.

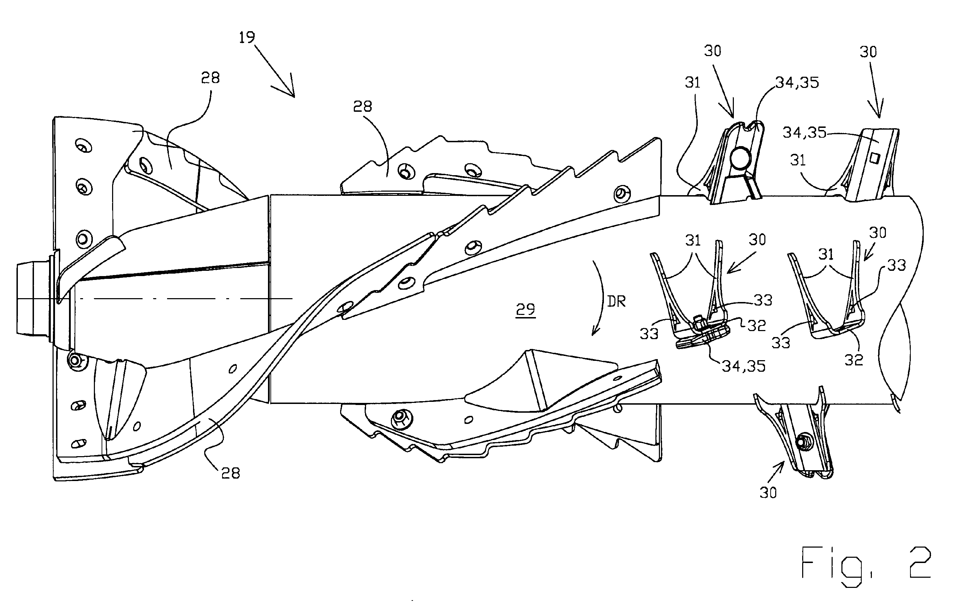

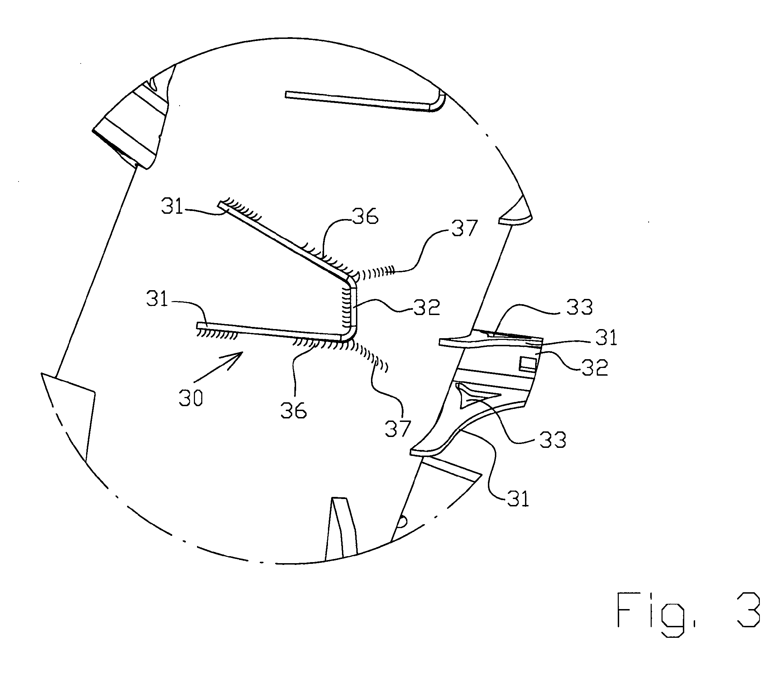

Die Darstellung in Fig. 2 zeigt eine Teilansicht eines in Längsrichtung in dem Mähdrescher angeordneten Abscheiderotors 19 des Axialabscheiders 2 gemäß Fig. 1. Der Abscheiderotor 19 ist auf seiner Mantelfläche 29 in Umfangsrichtung mit Leisten 28 sowie Erntegutbehandlungselementen 34 in Form von an Montageelementen 30 angeordneten Paddeln 35 versehen. Die Paddel 35 sind an den als Profilbauteilen ausgeführten, senkrecht zu der Mantelfläche 29 des Abscheiderotors 19 angeordneten Montageelementen 30 lösbar angeordnet, um diese bei Bedarf austauschen zu können. Die als U-Profile ausgeführten Montageelemente 30 sind mit der Mantelfläche 29 des Abscheiderotors 19 durch eine Schweißverbindung verbunden, wie in Fig. 3 im Detail dargestellt ist. Das U-förmige Montageelement 30 weist zwei einander zugewandte Seitenwände 31 und eine die beiden Seitenwände 31 stirnseitig miteinander verbindende Vorderwand 32 auf. Die Ausrichtung der Montageelemente 30 ist in Bezug auf die Drehrichtung DR des Abscheiderotors 19 derart gewählt ist, dass die das Erntegutbehandlungselement 34 tragende Vorderwand 32 des Montageelementes 30 im Wesentlichen in die Drehrichtung DR des Abscheiderotors 19 weist.

Die Seitenwände 31 des Montageelementes 30 sind mit Aussparungen 33 versehen, die bei einer auftretenden stoßartigen Belastung des Paddels 35 in einer Größenordnung, die einen Schwellwert für das Auftreffen eines Fremdkörpers, wie einen Stein oder dergleichen, überschreitet, und zu einem Abreißen des Montagelementes 30 von der Mantelfläche 29 des Abscheiderotors 19 führen könnte, ein Nachgeben des Montageelementes 30 ermöglichen. Das Montageelement 30 knickt ein respektive neigt es sich entgegen der Drehrichtung DR in Richtung der Mantelfläche 29, so dass das Abreißen des Montageelementes 30 von der Mantelfläche 29 des Abscheiderotors 19 durch die Stoßbelastung vermieden werden kann.

In Fig. 3 ist eine Detailansicht eines auf dem Abscheiderotor 19 angeordneten Montagelementes 30 gemäß Fig. 2 dargestellt. Das durch Schweißen mit der Mantelfläche 29 verbundene Montageelement 30 weist an seinen Seitenwänden 31 jeweils eine Längsschweißnaht 36 auf, die sich zumindest abschnittsweise entlang der einander abgewandten Außenseiten der Seitenwände 31 im Sockelbereich des Montageelementes 30 erstreckt, um dieses mit der Mantelfläche 29 des Abscheiderotors 19 zu verbinden. Die jeweilige Längsschweißnaht 36 an der Außenseite der jeweiligen Seitenwand 31 weist in ihrer Verlängerung einen Schweißnahtabschnitt 37 auf, der über die Seitenwand 31, vorzugsweise in Drehrichtung DR des Abscheiderotors 19, hinaus ausgeführt ist. Der über die Erstreckung der Seitenwände 31 hinausragenden Schweißnahtabschnitt 37 der jeweiligen Längsschweißnaht 36 ist unter einem Winkel zu der jeweiligen Seitenwand 31 ausgeführt. Vorteilhafterweise weitet sich der Abstand der Schweißnahtabschnitte 37 zueinander in Drehrichtung DR auf. Dabei hat sich eine V-förmige Ausprägung als besonders vorteilhaft gezeigt. Der wesentliche Vorteil der Verlängerung der Längsschweißnaht 36 über die Länge der Seitenwand 31 hinaus und die von der fluchtenden Fortführung des Schweißnahtabschnittes 37 in Längsrichtung der Seitenwände 31 abweichende Ausführung führt zu einem Abbau der während des Betriebes des Abscheiderotors 19 auftretenden Spannungsspitzen über die durch die Schweißnahtabschnitte 37 verlängerten Längsschweißnähte 36.

### Bezugszeichenliste

| | | | |
|---|---|---|---|
| 1 | Mähdrescher | 21 | Deckbereich |
| 2 | Axialabscheideorgan | 22 | Rücklaufboden |
| 3 | Schneidwerk | 23 | Förderschnecke |
| 4 | Drescheinrichtung | 24 | Elevator |
| 5 | Reinigungseinrichtung | 25 | Abgabebereich |
| 6 | Korntank | 26 | Auslassbreite |
| 7 | Fahrerkabine | 27 | Strohauslaufhaube |
| 8 | Strohhäcksler | 28 | Leiste |
| 9 | Erntegut | 29 | Mantelfläche |
| 10 | Schrägförderkanal | 30 | Montageelement |
| 11 | Dreschtrommel | 31 | Seitenwand |
| 12 | Dreschkorb | 32 | Vorderwand |
| 13 | Gebläse | 33 | Aussparung |
| 14 | Förderboden | 34 | Erntgutbehandlungselement |
| 15 | Obersieb | 35 | Paddel |
| 16 | Untersieb | 36 | Längsschweißnaht |
| 17 | Wendetrommel | 37 | Schweißnahtabschnitt |
| 18 | Gehäuse | FR | Fahrtrichtung |
| 19 | Rotor | DR | Drehrichtung |
| 20 | Abscheidrost | | |

## Patentansprüche

1. Montagebauteil (30) zur Befestigung eines Erntegutbehandlungselementes (34, 35) an einem Abscheiderotor (19), wobei das Montagebauteil (30) als ein Profilbauteil mit sich abschnittsweise in Umfangsrichtung des Abscheiderotors (19) erstreckenden, einander zugewandten Seitenwänden (31) ausgeführt ist,
**dadurch gekennzeichnet, dass**
zur Befestigung des Montagebauteiles (30) auf der Oberfläche des Abscheiderotors (19) jede der Seitenwände (31) des Montagebauteiles (30) eine im Wesentlichen parallel zu dieser verlaufende Längsschweißnaht (36) mit einem über die Länge der jeweiligen Seitenwand (31) hinausgehenden Schweißnahtabschnitt (37) aufweist.

2. Montagebauteil (30) nach Anspruch 1, **dadurch gekennzeichnet, dass** der über die Länge der jeweiligen Seitenwand (31) hinausgehende Schweißnahtabschnitt (37) unter einem Winkel zu der jeweiligen Seitenwand (31) ausgeführt ist.

3. Montagebauteil (30) nach einem der Ansprüche 1 oder 2, **dadurch gekennzeichnet, dass** sich der über die Länge der jeweiligen Seitenwand (31) hinausgehende Schweißnahtabschnitt (37) der Längsschweißnaht (36) in Drehrichtung (DR) des Abscheiderotors (19) erstreckt.

4. Montagebauteil (30) nach einem der Ansprüche 1 bis 3, **dadurch gekennzeichnet, dass** sich der axiale Abstand der Schweißnahtabschnitte (37) der Längsschweißnähte (36) zueinander in Drehrichtung (DR) des Abscheiderotors (19) vergrößert.

5. Montagebauteil (30) nach einem der Ansprüche 1 bis 4, **dadurch gekennzeichnet, dass** das Montagebauteil (30) als ein U-Profil ausgeführt ist.

6. Montagebauteil (30) nach einem der Ansprüche 1 bis 5, **dadurch gekennzeichnet, dass** die Seitenwände (31) des Montagebauteiles (30) auf ihrer der Oberfläche des Abscheiderotors (19) zugewandten Seite an die zylindrische Kontur des Abscheiderotors (19) angepasst sind.

7. Montagebauteil (30) nach einem der Ansprüche 1 bis 6, **dadurch gekennzeichnet, dass** die Seitenwände (31) des Montagebauteiles (30) eine Aussparung (33) aufweisen.

## Claims

1. A mounting component (30) for fixing a crop processing element (34, 35) to a separating rotor (19), wherein the mounting component (30) is in the form of a profile component with mutually facing side walls (31) extending portion-wise in the peripheral direction of the separating rotor (19),
**characterised in that**
for fixing the mounting component (30) on the surface of the separating rotor (19) each of the side walls (31) of the mounting component (30) has a longitudinal weld seam (36) which extends substantially parallel thereto and has a weld seam portion (37) extending beyond the length of the respective side wall (31).

2. A mounting component (30) according to claim 1 **characterised in that** the weld seam portion (37) extending beyond the length of the respective side wall (31) is at an angle to the respective side wall (31).

3. A mounting component (30) according to one of claims 1 and 2 **characterised in that** the weld seam portion (37) of the longitudinal weld seam (36), extending beyond the length of the respective side wall (31), extends in the direction of rotation (DR) of the separating rotor (19).

4. A mounting component (30) according to one of claims 1 to 3 **characterised in that** the axial spacing of the weld seam portions (37) of the longitudinal weld seams (36) relative to each other increases in the direction of rotation (DR) of the separating rotor (19).

5. A mounting component (30) according to one of claims 1 to 4 **characterised in that** the mounting component (30) is in the form of a U-shaped profile member.

6. A mounting component (30) according to one of claims 1 to 5 **characterised in that** on their side towards the surface of the separating rotor (19) the side walls (31) of the mounting component (30) are adapted to the cylindrical contour of the separating rotor (19).

7. A mounting component (30) according to one of claims 1 to 6 **characterised in that** the side walls (31) of the mounting component (30) have an opening (33).

## Revendications

1. Composant de montage (30) servant à fixer un élément de traitement de produits de récolte (34, 35) au niveau d'un rotor séparateur (19), où le composant de montage (30) est réalisé sous la forme d'un composant profilé comprenant des parois latérales (31) tournées les unes vers les autres, s'étendant par endroits dans le sens périphérique du rotor séparateur (19),
**caractérisé en ce**
**qu'**aux fins de la fixation du composant de montage (30) sur la surface du rotor séparateur (19), 1 chacune des parois latérales (31) du composant de montage (30) présente un joint de soudure longitudinal (36) s'étendant essentiellement de manière parallèle par rapport à ladite paroi et présentant une section de joint de soudure (37) allant au-delà de la longueur de la paroi latérale (31) respective.

2. Composant de montage (30) selon la revendication 1, **caractérisé en ce que** la section de joint de soudure (37) allant au-delà de la longueur de la paroi latérale (31) respective est réalisée selon un certain angle par rapport à la paroi latérale (31) respective.

3. Composant de montage (30) selon l'une quelconque des revendications 1 ou 2, **caractérisé en ce que** la section de joint de soudure (37), allant au-delà de la longueur de la paroi latérale (31) respective, du joint de soudure longitudinal (36) s'étend dans le sens de rotation (DR) du rotor séparateur (19).

4. Composant de montage (30) selon l'une quelconque des revendications 1 à 3, **caractérisé en ce que** la distance axiale entre les sections de joint de soudure (37) du joint de soudure longitudinal (36) s'agrandit dans le sens de rotation (DR) du rotor séparateur (19).

5. Composant de montage (30) selon l'une quelconque des revendications 1 à 4, **caractérisé en ce que** le composant de montage (30) est réalisé sous la forme d'un profilé en U.

6. Composant de montage (30) selon l'une quelconque des revendications 1 à 5, **caractérisé en ce que** les parois latérales (31) du composant de montage (30) sont adaptées, sur leur côté tourné vers la surface du rotor séparateur (19), au contour cylindrique du rotor séparateur (19).

7. Composant de montage (30) selon l'une quelconque des revendications 1 à 6, **caractérisé en ce que** les parois latérales (31) du composant de montage (30) présentent un évidement (33).
